# EUROPEAN PATENT APPLICATION

(11) **EP 4 835 520 A1**
(43) Date of publication of application: **04.11.2026**
(21) Application number: 24911347.3
(22) Date of filing: 26.12.2024
(51) Int. Cl.: G01T 1/16, G21C 17/06, G21F 9/06, G01T 7/00

(54) **ANALYSIS AND DETECTION APPARATUS AND SPENT FUEL REPROCESSING SYSTEM**

(30) Priority: 29.12.2023 CN 202311861529
(71) Applicant: Tsinghua University, Haidian District Beijing 100084 (CN); Nuctech Company Limited, TongFang Building Shuangqinglu Haidian District Beijing 100084 (CN)
(72) Inventor: ZONG, Chunguang, Beijing 100084 (CN); LI, Yuanjing, Beijing 100084 (CN); YANG, Yigang, Beijing 100084 (CN); MING, Shenjin, Beijing 100084 (CN); SONG, Quanwei, Beijing 100084 (CN); SHI, Junping, Beijing 100084 (CN); FAN, Xuping, Beijing 100084 (CN); WANG, Dongyu, Beijing 100084 (CN); MENG, Hui, Beijing 100084 (CN); WANG, Feng, Beijing 100084 (CN); ZHANG, Li, Beijing 100084 (CN)
(74) Representative: Gunzelmann, Rainer
(86) International application number: PCT/CN2024/142768
(87) International publication number: WO 2025/140426

(57) **Abstract**

The present disclosure relates to an analysis and detection apparatus and a spent fuel reprocessing system. The analysis and detection apparatus comprises: a base; a carrying platform movably arranged on the base in a first direction and a second direction perpendicular to each other in a horizontal plane; an accelerator assembly and a radiation source, wherein the radiation source is located on one side of the accelerator assembly in the second direction, and the radiation source is used for receiving radiations emitted by the accelerator assembly to generate particles; a measuring assembly fixedly mounted relative to the base and used for accommodating an object under detection to implement a detection mode; a calibration assembly detachably arranged and used for accommodating a calibration object to implement a calibration mode; a shielding body used for providing radiation protection for the radiation source, the measuring assembly, and the calibration assembly; and a detector assembly arranged on one side of the shielding body in the first direction; wherein the accelerator assembly, the shielding body, and the detector assembly are all arranged on the carrying platform, and the carrying platform is configured to drive the shielding body to reach or leave a protection position in the first direction.

## Description

### CROSS-REFERENCE TO RELATED APPLICATIONS

The present disclosure is based on and claims the priority right of a Chinese application No. 202311861529.8 filed on December 29, 2023, the disclosure of which is incorporated herein by reference in its entirety.

### TECHNICAL FIELD

The present disclosure relates to the technical field of analysis and detection for radioactive substances, and in particular to an analysis and detection device and a spent fuel reprocessing system.

### BACKGROUND

In the conventional application of analysis and detection for radioactive substances, a strict distinction is made between a calibration mode and a working mode (i.e. detection mode). In the calibration mode, i.e. in the non-working state, a calibration object with known physical and chemical compositions obtained via experimental assay or precision detection is used as a test object to verify a test system and a test method, and the test result is input into the test system as important parameters. In the working mode, a test object with unknown compositions is input into a system measurement position for detection. Therefore, the whole test system needs to switch between the calibration mode and the working mode. At this time, the system needs to be shut down, and the test object and the calibration object need to be manually replaced, which requires a succession of complicated manual operations.

For some industries that produce industrial products in large quantities, the test system is only a front-end section therein but is the key link of the whole system production, and the excessively long downtime may affect the whole system production link. In addition, for systems involving detection of toxic and radioactive test object, the switching between the two modes may also expose analyzing and operating personnels to hazards such as radiation.

### SUMMARY

The embodiments of the present disclosure provide an analysis and detection device and a spent fuel reprocessing system, which can improve the detection and maintenance efficiency of the analysis device.

According to a first aspect of the present disclosure, an analysis and detection device is provided, including:
a base;
a support platform movably disposed on the base along a first direction and a second direction which are perpendicular to each other within a horizontal plane;
an accelerator assembly and a radiation source, wherein the radiation source is located on a side of the accelerator assembly along the second direction, the radiation source is fixed relative to the accelerator assembly and is configured to receive radiation beam emitted by the accelerator assembly to generate particles;
a measurement assembly fixedly mounted relative to the base and configured to accommodate a test object to enable a detection mode;
a calibration assembly detachably disposed, which is configured to accommodate a calibration object to enable a calibration mode;
a shielding body for shielding the radiation source, the measurement assembly and the calibration assembly from radiation; and
a detector assembly disposed at a side of the shielding body along the first direction and configured to receive the particles having interacted with the test object or the calibration object so as to analyze type and content of the test object or the calibration object;
wherein the accelerator assembly, the shielding body and the detector assembly are all disposed on the support platform, and the support platform is configured to drive the shielding body to move to or away from a shielding position along the first direction.

In some embodiments, the support platform is configured to, when the calibration assembly needs to be installed or removed, drive the shielding body to move away from the shielding position along the first direction, and when it is required to enter the calibration mode or the detection mode, drive the shielding body to move to the shielding position in a direction opposite to the first direction.

In some embodiments, the support platform is configured to be movable along second direction so as to align the radiation source and the detector assembly with either of the measurement assembly or the calibration assembly.

In some embodiments, in the calibration mode, the calibration assembly is fixed with respect to the base and is mounted between the measurement assembly and the radiation source along the second direction; in the detection mode, the calibration assembly is removed.

In some embodiments, in the detection mode, the support platform is configured to move along the second direction to move the radiation source close to the measurement assembly, such that a distance between the radiation source and the measurement assembly is equal to a distance between the radiation source and the calibration assembly in the calibration mode.

In some embodiments,
in the calibration mode, the detector assembly is aligned with the calibration assembly along the second direction; or
in the detection mode, the detector assembly is aligned with the measurement assembly along the second direction.

In some embodiments, the calibration assembly includes a first bracket and a calibration cell; the first bracket is configured to achieve detachable mounting, and the calibration cell is mounted to the first bracket in a pluggable manner and is configured to accommodate the calibration object.

In some embodiments, on a side of the accelerator assembly is disposed a drift tube which extends along the second direction for defining a path of the radiation beam, and the drift tube extends into the shielding body and has its end portion fixed with the radiation source.

In some embodiments, on a side of the accelerator assembly is disposed a drift tube which extends along the second direction for defining a path of the radiation beam, and the drift tube extends into the shielding body; and the radiation source is fixed to an inner wall of the shielding body and located at an end of the drift tube.

In some embodiments, the support platform includes a lower platform and an upper platform, the analysis and detection device further including:
a first driving component disposed between the base and the lower platform and configured to drive the lower platform to move with respect to the base along one of the first direction and the second direction; and
a second driving component disposed between the lower platform and the upper platform and configured to drive the upper platform to move with respect to the lower platform along the other one of the first direction and the second direction.

In some embodiments, an area of the lower platform is smaller than that of the upper platform.

In some embodiments, the analysis and detection device further includes two guide rails, wherein the two guide rails are disposed on the base at intervals, and extend in a direction consistent with a movement direction of the lower platform.

In some embodiments, the accelerator assembly includes a second bracket and an accelerator; the second bracket is fixed to the support platform, and the accelerator is movably mounted on the second bracket along the second direction.

In a second aspect of the present disclosure, a spent fuel reprocessing system is provided, which includes the analysis and detection device in the above embodiments.

Based on the above technical solution, the support platform is designed to be movable in two degrees of freedom. By moving the support platform along the first direction or the second direction, the accelerator assembly, the radiation source, the shielding body and the detector assembly can be moved synchronously; the installation and removal of the calibration assembly can be achieved by moving the shielding body along the first direction; and in the calibration mode or the detection mode, the accelerator assembly, the radiation source and the detector assembly may be adjusted to positions corresponding to those of the measurement assembly or the calibration assembly to meet the requirements in this mode, thereby enabling the analysis and detection device to be flexibly switched between the calibration mode and the detection mode. This facilitates detection and maintenance, reduces the calibration downtime of the analysis and detection device, and reduces the impact on the efficiency of the whole production system. Moreover, if the test object is toxic or radioactive, the shielding body can provide protection no matter in the calibration mode or the detection mode to protect operators from injury.

### BRIEF DESCRIPTION OF THE DRAWINGS

The accompanying drawings described herein are provided to facilitate further understanding of the present disclosure and constitute a part of the present application. The illustrative embodiments of the present disclosure and the descriptions thereof serve to explain the present disclosure without imposing any inappropriate limitation thereon. In the accompanying drawings:
FIG. 1 is a front view of an analysis and detection device according to some embodiments of the present disclosure.
FIG. 2 is a top view of the analysis and detection device according to some embodiments of the present disclosure.
FIG. 3 is a side view of the analysis and detection device according to some embodiments of the present disclosure.
FIG. 4 is a perspective view of the analysis and detection device according to some embodiments of the present disclosure.
FIG. 5 is a schematic view obtained by rotating the top view of FIG. 2 by 90°.
FIG. 6 is a side view showing that a first driving component moves along a first direction to drive a shielding body away from the shielding position.
FIG. 7 is a schematic view where a calibration assembly is mounted.
FIG. 8 is a schematic view where the calibration assembly is removed.
FIG. 9 is a top view showing that a second driving component moves in a second direction to bring a radiation source close to a measurement assembly.
FIG. 10 is a side view of FIG. 9.
FIG. 11 is a top view of the analysis and detection device in a detection mode.
FIG. 12 is a side view showing that an accelerator is moved outward in a second direction when maintenance of the accelerator is required.

### DETAILED DESCRIPTION

The present disclosure is described in detail below. In the following paragraphs, different aspects of the embodiments are defined in more detail. Aspects so defined may be combined with any other aspect or aspects unless explicitly stated to be non-combinable. In particular, any feature considered to be preferred or advantageous may be combined with one or more other features considered to be preferred or advantageous.

The terms "first", "second", and the like in the present disclosure are used for convenience of description only to distinguish different components having the same name, and do not indicate any sequential order or priority.

In the description of the present disclosure, directional or positional relationships indicated by "upper", "lower", "top", "bottom", "front", "rear", "inner", and "outer" and the like are those based on the drawings. These terms are used only for the convenience of describing the present disclosure, and do not indicate or imply that the device referred to must have a specific orientation or be constructed and operated in a specific orientation, and thus, should not be construed as limiting the scope of the present disclosure.

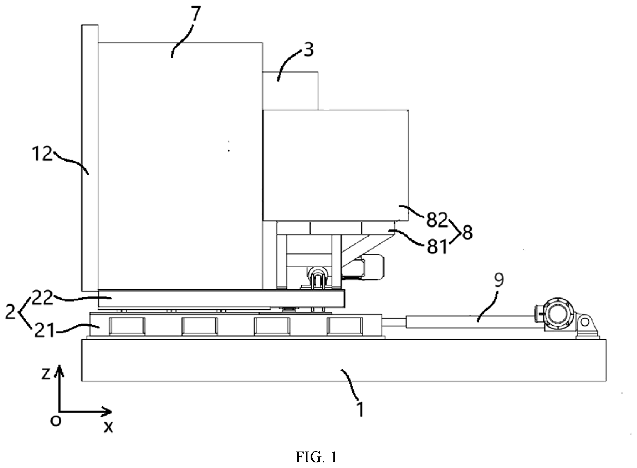

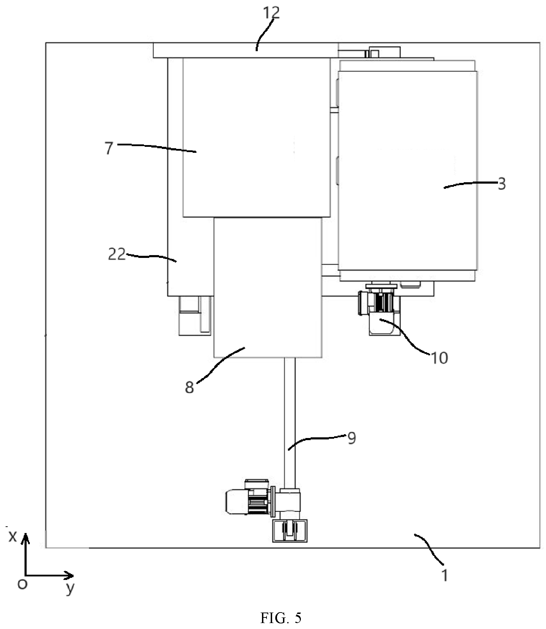

The present disclosure provides an analysis and detection device having a calibration mode and a detection mode. In some embodiments, as shown in FIGS. 1-12, the analysis and detection device of the present disclosure includes:
a base 1;
a support platform 2 movably disposed on the base 1 along a first direction x and a second direction y which are perpendicular to each other within a horizontal plane;
an accelerator assembly 3 and a radiation source 4, wherein the radiation source 4 is located at a side of the accelerator assembly 3 along the second direction y, the radiation source 4 is fixed relative to the accelerator assembly 3 and is configured to receive radiation beam emitted by the accelerator assembly 3 to generate particles;
a measurement assembly 5 fixedly mounted relative to the base 1 and configured to accommodate a test object to enable a detection mode;
a calibration assembly 6 detachably disposed, which is configured to accommodate a calibration object to enable a calibration mode;
a shielding body 7 for shielding the radiation source 4, the measurement assembly 5 and the calibration assembly 6 from radiation; and
a detector assembly 8 disposed at a side of the shielding body 7 along the first direction x, and configured to receive the particles having interacted with the test object or the calibration object, so as to analyze a type and a content of the test object or the calibration object;
wherein the accelerator assembly 3, the shielding body 7 and the detector assembly 8 are all disposed on the support platform 2, and the support platform 2 is configured to drive the shielding body 7 to move to or away from the shielding position along the first direction x.

In particular, the base 1 may be a flat plate structure that is made of, for example, steel or other materials. The support platform 2 is disposed on the base 1 and movable in two degrees of freedom within a horizontal plane, and can be driven to move manually or automatically. The first direction x and the second direction y are both located within the horizontal plane and are perpendicular to each other, and a third direction z is perpendicular to the first direction x and the second direction y, namely perpendicular to the horizontal plane.

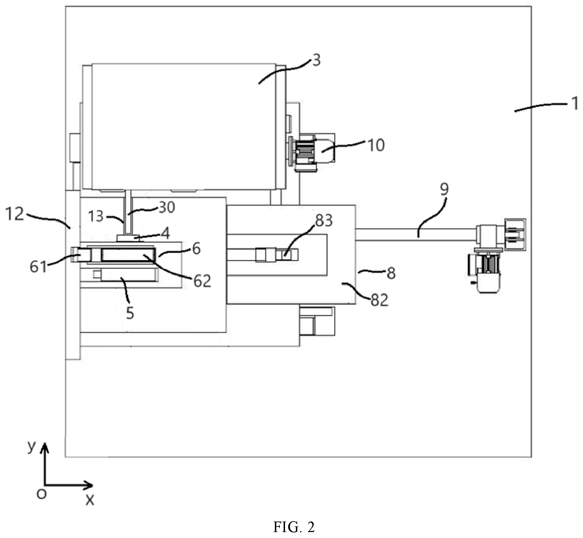

As shown in FIG. 1 and FIG. 2, the accelerator assembly 3 is configured to emit radiation. On a side of the accelerator assembly 3 along the second direction y is disposed a drift tube 30, which extends along the second direction y, and is configured to guide a radiation beam current. The radiation source 4 is located at an end of the drift tube 30 away from the accelerator assembly 3 and is configured to receive the radiation emitted by the accelerator assembly 3 to generate particles.

The measurement assembly 5 or the calibration assembly 6 is located at a side of the radiation source 4 away from the drift tube 30 along the second direction y. For example, the measurement assembly 5 may include a measurement cell for accommodating the test object, and the calibration assembly 6 may include a calibration cell 62 for accommodating the calibration object. The test object and the calibration object may be liquid. The measurement assembly 5 and the calibration assembly 6 are both located at a side of the radiation source 4 away from the accelerator assembly 3 along the second direction y, and both the measurement assembly 5 and the calibration assembly 6 may be arranged side by side along the second direction y and may be of the same size.

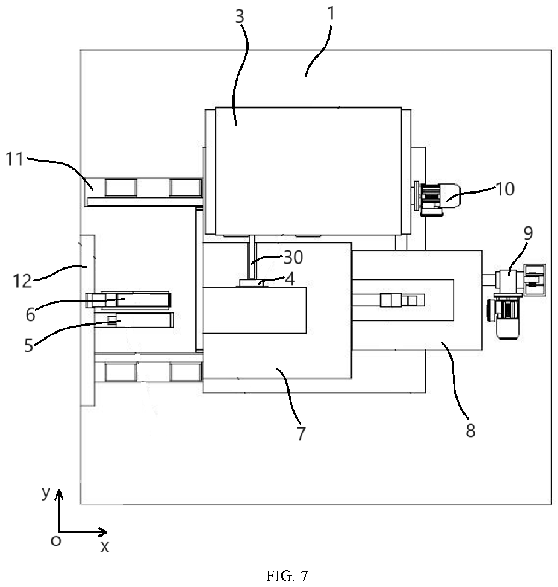

As shown in FIG. 7, a vertical plate 12 is arranged vertically and fixedly mounted on the base 1 with its position kept unchanged. Both the measurement assembly 5 and the calibration assembly 6 are mounted on the vertical plate 12. The calibration cell 62 and the measurement cell may each be a rectangular cell, the length direction of which is consistent with the first direction x, and which may be made of a metal material. In the calibration mode, the radiation source 4 is located at a side of the calibration cell 62 along the second direction y, and particles generated by the radiation source 4 can enter a calibration object such as liquid through a metal sidewall of the calibration cell 62 and then be received by the detector assembly 8 to analyze the type and the content of the calibration object. In general, in the calibration mode, the measurement cell does not contain a test object. Alternatively, if the measurement cell contains a test object, in order to prevent the test object from being affected, a shielding layer may be disposed on an external side surface of the calibration cell 62 away from the radiation source 4 along the second direction y. In the detection mode, the radiation source 4 is located at a side of the measurement cell along the second direction y, and particles generated by the radiation source 4 can enter a test object, such as liquid, through a metal sidewall of the measurement cell.

The detector assembly 8 is located at a side of the measurement assembly 5 and the calibration assembly 6 away from the mounting position along the first direction x, and is configured to receive particles such as neutrons having interacted with the test object or the calibration object, so as to analyze the type and the content of the test object or the calibration object according to the number of the particles.

In both the calibration mode and the working mode, the shielding body 7 is required to fully enclose the area where the measurement assembly 5, the calibration assembly 6 and the radiation source 4 are located. For example, in FIG. 2 or other top views, the rectangular frame at the top of the shielding body 7 is not actually an opening and is only used to visualize the internal structure, and the rectangular frame at the top of the detector assembly 8 is also only used to visualize the structure of a detector 83 therein. For example, the detector assembly 8 may include a shell for enclosing the detector 83, and the shell is made of a shielding material. For example, the shielding body 7 may have a cuboidal gate-shaped structure, or a gate-shaped structure with an arched top, etc., which combines with the vertical plate 12 to be described below to form a hollow cavity for accommodating the measurement assembly 5 and the calibration assembly 6.

Taking the detection mode (i.e., working mode) as an example, the radiation emitted from the accelerator assembly 3 enters the radiation source 4 through the drift tube 30; the radiation source 4 may generate particles such as neutrons, which enter the test object in the measurement assembly 5; and finally the particles having interacted with the test object or the calibration object are received by the detector assembly 8, so as to analyze the type and the content of the test object or the calibration object.

In this embodiment, the support platform 2 is designed to be movable in two degrees of freedom, and the accelerator assembly 3, the shielding body 7 and the detector assembly 8 are all arranged on the support platform 2. By moving the support platform 2 along the first direction x or the second direction y, the accelerator assembly 3, the radiation source 4, the shielding body 7 and the detector assembly 8 can be moved synchronously; the installation and removal of the calibration assembly 6 can be achieved by moving the shielding body 7 along the first direction x; and in the calibration mode or the detection mode, the accelerator assembly 3, the radiation source 4 and the detector assembly 8 may be adjusted to positions corresponding to that of the measurement assembly 5 or the calibration assembly 6 to meet the requirements in this mode, thereby enabling the analysis and detection device to be flexibly switched between the calibration mode and the detection mode. This facilitates detection and maintenance, reduces the calibration downtime of the analysis and detection device, and reduces the impact on the efficiency of the whole production system. Moreover, if the test object is toxic or radioactive, the shielding body 7 can provide protection no matter in the calibration mode or the detection mode to protect operators from injury.

In addition, in the calibration mode and the detection mode, the positional relationship between the accelerator assembly 3, the radiation source 4 and the detector assembly 8 is kept unchanged. The consistent measuring reference in both modes can improve the detection accuracy of the test object.

In some embodiments, the support platform 2 is configured to, when the calibration assembly 6 needs to be installed or removed, drive the shielding body 7 to move away from the shielding position along the first direction x, and when it is desired to enter the calibration mode or the detection mode, drive the shielding body 7 to move to the shielding position in a direction opposite to the first direction x.

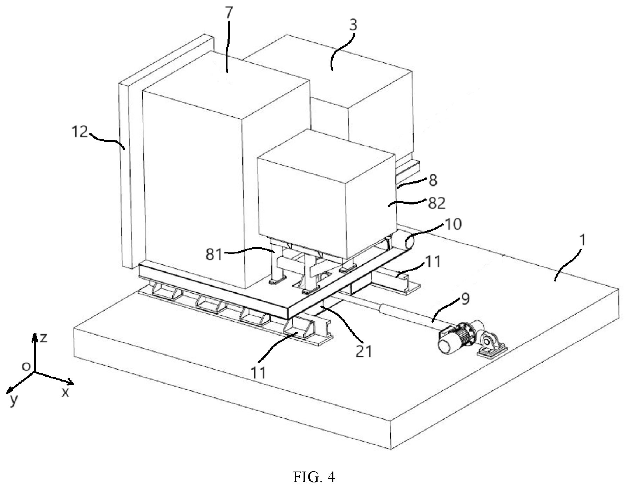

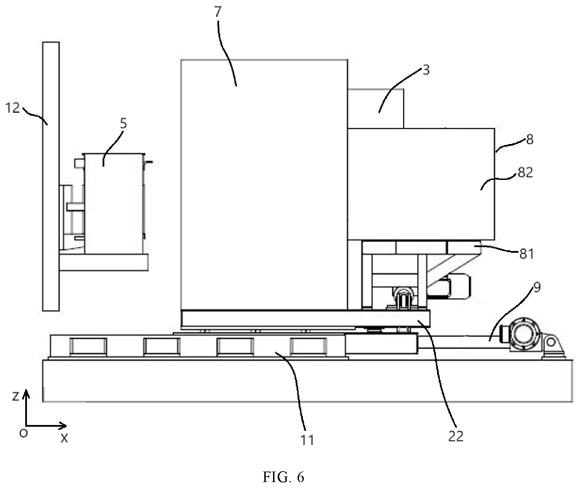

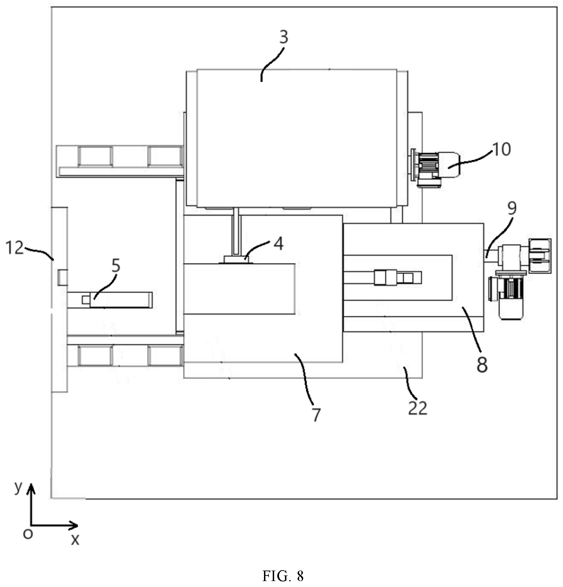

As shown in FIG. 6, when the calibration assembly 6 needs to be installed, the support platform 2 is moved towards a side away from the measurement assembly 5 along the first direction x to fully expose the measurement assembly 5, i.e. leaving the shielding position; as shown in FIG. 7, at this time, the calibration assembly 6 may be installed, and then the shielding body 7 may be brought to the shielding position for calibration; as shown in FIG. 8, after completion of the calibration mode, the calibration assembly 6 may be removed. As shown in FIG. 4, in the calibration mode or the detection mode, the opening of the shielding body 7 is abutted against the vertical plate 12, thus completely enclosing the positions where the radiation source 4, the measurement assembly 5 and the calibration assembly 6 are located for radiation shielding.

In this embodiment, the calibration assembly 6 can be conveniently removed and installed to switch between the detection mode and the calibration mode by moving the support platform 2 along the first direction x. Moreover, during operation in these two modes, the shielding body 7 can provide protection to prevent radiative materials from leaking out.

In some embodiments, the support platform 2 is configured to be movable along the second direction y so as to align the radiation source 4 and the detector assembly 8 with either of the measurement assembly 5 or the calibration assembly 6.

When it is desired to enter the detection mode and the calibration mode, when the support platform 2 drives the shielding body 7 to move along the first direction x to the shielding position, the accelerator assembly 3, the radiation source 4 and the detector assembly 8 are also moved into place along the first direction x.

When it is desired to enter the calibration mode, as shown in FIG. 6, the support platform 2 is moved along the second direction y to align the detector assembly 8 with the calibration assembly 6 along the second direction y, and accordingly the radiation source 4 is located at a side of the calibration assembly 6 away from the measurement assembly 5 along the second direction y.

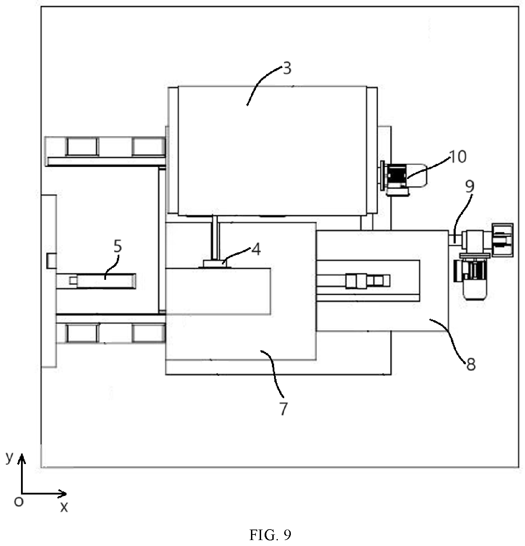

When it is desired to enter the detection mode, as shown in FIGS. 8 and 9, the support platform 2 is moved along the second direction y to align the detector assembly 8 with the measurement assembly 5, and accordingly the radiation source 4 is closer to the measurement assembly 5 along the second direction y.

In particular, as can be seen from FIGS. 1 and 2, the detector assembly 8 includes a third bracket 81, a shell 82 and a detector 83, wherein the third bracket 81 is fixed on the support platform 2, the shell 82 is disposed on the third bracket 81, and the detector 83 is disposed within the shell 82. In the calibration mode, the detector 83 is aligned with the calibration assembly 6 along the second direction y, that is, the detector 83 and the calibration assembly 6 are located on the same line, which extends along the first direction x; in the detection mode, the detector 83 is aligned with the measurement assembly 5 along the second direction y, i.e. the detector 83 and the measurement assembly 5 are located on the same line, which extends along the first direction x.

In this embodiment, by moving the support platform 2 along the second direction y to match the positions of the radiation source 4 and the detector assembly 8 with those of the measurement assembly 5 or the calibration assembly 6, the positional requirements of the main components in the calibration mode and the detection mode can be flexibly met.

In some embodiments, as shown in FIG. 2, in the calibration mode, the calibration assembly 6 is fixed with respect to the base 1 and mounted between the measurement assembly 5 and the radiation source 4 along the second direction y; as shown in FIG. 8, in the detection mode, the calibration assembly 6 is removed.

In this embodiment, the calibration assembly 6 is mounted between the measurement assembly 5 and the radiation source 4 along the second direction y, such that in the calibration mode, the radiation source 4 is closer to the calibration assembly 6, while the measurement assembly 5 is located at a side remote from the radiation source 4; in the detection mode, after the calibration assembly 6 is removed, the radiation source 4 is brought close to the measurement assembly 5 along the second direction y, so that the test object can be detected. Thus, the analysis and detection device can be flexibly and conveniently switched between the calibration mode and the detection mode.

In some embodiments, as shown in FIGS. 7 to 9, in the detection mode, the support platform 2 is configured to bring the radiation source 4 close to the measurement assembly 5 by moving along the second direction y, such that a distance between the radiation source 4 and the measurement assembly 5 is equal to a distance between the radiation source 4 and the calibration assembly 6 in the calibration mode.

As shown in FIG. 7, when it is desired to enter the calibration mode, the radiation source 4 is at a short distance from the calibration assembly 6. As shown in FIG. 8, after calibration is completed, the calibration assembly 6 is removed, and at this time, the radiation source 4 is at a great distance from the measurement assembly 5 along the second direction y. As shown in FIG. 9, when it is desired to enter the detection mode, the radiation source 4 is moved along the second direction y towards the measurement assembly 5 until the distance between the radiation source 4 and the measurement assembly 5 along the second direction y is consistent with the distance between the radiation source 4 and the calibration assembly 6 in the calibration mode.

In this embodiment, the distance between the radiation source 4 and the test object along the second direction y in the detection mode is consistent with the distance between the radiation source 4 and the calibration object in the calibration mode, ensuring that the test conditions are the same in both modes, thereby improving the detection accuracy of the test object.

In some embodiments, as shown in FIG. 2, the calibration assembly 6 includes a first bracket 61 and a calibration cell 62, wherein the first bracket 61 is configured to achieve detachable mounting, and the calibration cell 62 is mounted on the first bracket 61 in a pluggable manner and is configured to accommodate the calibration object.

Specifically, the analysis and detection device further includes a vertical plate 12, which is disposed at a side of the base 1 close to the measurement assembly 5 along the first direction x, and which may be provided with a hook member or a support member for hanging or placing the first bracket 61 on the vertical plate 12 thereby to facilitate overall removal of the calibration assembly 6. The calibration cell 62 may be a rectangular cell, the length direction of which is consistent with the first direction x, and which is mounted on the first bracket 61 in a pluggable manner, such that the calibration cells 62 containing different calibration objects can be conveniently replaced, thereby improving the calibration efficiency. For example, different calibration cells 62 contain solutions of different concentrations.

In some embodiments, the accelerator assembly 3 is provided at a side with a drift tube 30 extending along the second direction y for defining a path of the radiation beam. The drift tube 30 extends into an interior of the shielding body 7 and has its end portion fixed with the radiation source 4. This structure facilitates to ensure the positional relationship between the radiation source 4 and the drift tube 30, so that the radiation within the drift tube 30 can reliably enter the radiation source 4 to generate particles, thereby improving the working reliability of the analysis and detection device.

In some embodiments, as shown in FIG. 2, on a side of the accelerator assembly 3 is provided a drift tube 30 extending along the second direction y for defining the path of the radiation beam. The drift tube 30 extends into the shielding body 7, and the radiation source 4 is fixed to an inner wall of the shielding body 7 and located at an end of the drift tube 30. The inner wall of the shielding body 7 is provided with a support tube 13, the radiation source 4 is fixed at an end of the support tube 13, and the drift tube 30 extends into the support tube 13. When the radiation source 4 has a large volume or weight, this means of fixing the radiation source 4 can improve the reliability of installation and fixation.

In some embodiments, as shown in FIGS. 1, 3 and 4, the support platform 2 includes a lower platform 21 and an upper platform 22, and the analysis and detection device further includes:
a first driving component 9 disposed between the base 1 and the lower platform 21 and configured to drive the lower platform 21 to move with respect to the base 1 along one of the first direction x and the second direction y; and
a second driving component 10 disposed between the lower platform 21 and the upper platform 22 and configured to drive the upper platform 22 to move with respect to the lower platform 21 along the other one of the first direction x and the second direction y.

The first driving component 9 and the second driving component 10 are both linear drive components, such as electric push rods, pneumatic cylinders or hydraulic cylinders, or drive components that convert rotational movement into linear movement.

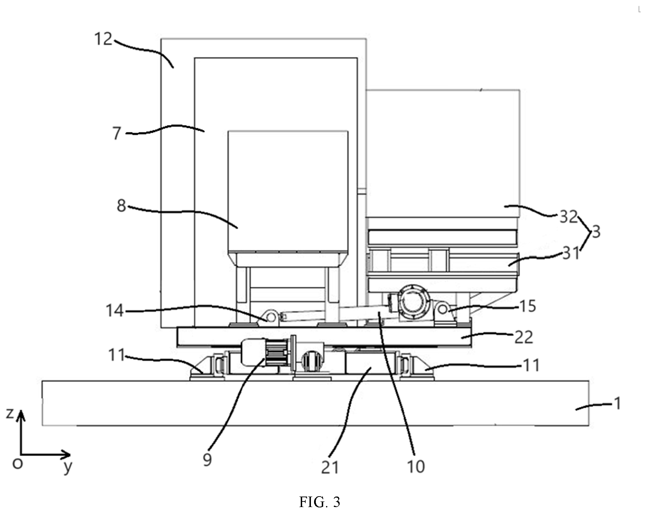

For example, in FIG. 4, the first driving component 9 drives the lower platform 21 to move relative to the base 1 along the first direction x, and the second driving component 10 drives the upper platform 22 to move relative to the lower platform 21 along the second direction y. The first driving component 9 and the second driving component 10 may be connected by means of end hinges at their respective ends. One end of the first driving component 9 is hinged to the base 1, and the other end thereof is connected to the lower platform 21. As shown in FIG. 3, the lower platform 21 is provided with a first hinge lug 14, and the upper platform 22 is provided with a second hinge lug 15, wherein the second driving component 10 has one end hinged to the first hinge lug 14, and has the other end hinged to the second hinge lug 15.

In this embodiment, the support platform 2 is configured as a dual-layer platform, which conveniently enables movement of the support platform 2 in two directions, with the movement in each direction being independent of the other, thereby facilitating control. Furthermore, by providing two drive components to drive the two support platforms 2 to move in two directions, the degree of automation in switching the analysis and detection device between the calibration mode and the detection mode can be enhanced, efficiency and control accuracy can be improved, and manual participation can be reduced.

In some embodiments, an area of the lower platform 21 is smaller than that of the upper platform 22. As the upper platform 22 needs to accommodate the accelerator assembly 3, the shielding body 7 and the detector assembly 8 simultaneously, a large area is required. Further, setting the lower platform 21 to have a small area can save materials and facilitate the installation of the second driving component 10 between the lower platform 21 and the upper platform 22. The end of the second driving component 10 may be connected to an end of the upper platform 22 or a region near the middle thereof.

In some embodiments, as shown in FIG. 4, the analysis and detection device further includes two guide rails 11, which are disposed on the base 1 at intervals, and extend in a direction consistent with a movement direction of the lower platform 21.

For example, in FIG. 4, the lower platform 21 moves along the first direction x, the two guide rails 11 are arranged at an interval along the second direction y, and each guide rail 11 extends along the first direction x.

In this embodiment, by providing two guide rails 11 to guide movement of the lower platform 21, the movement of the lower platform 21 can be smoother, and accordingly the support stability of the lower platform 21 for the upper platform 22 and the components thereon, as well as the movement control accuracy can be improved.

In some embodiments, a guide member, such as a guide wheel or a rolling bearing, is provided between the lower platform 21 and the upper platform 22. In order to install and position the guide member, a groove is provided on an opposite surface of the lower platform 21 or the upper platform 22 for receiving the guide member. This configuration can provide guidance for the movement of the upper platform 22 and improve the stability of the components on the upper platform 22 during movement.

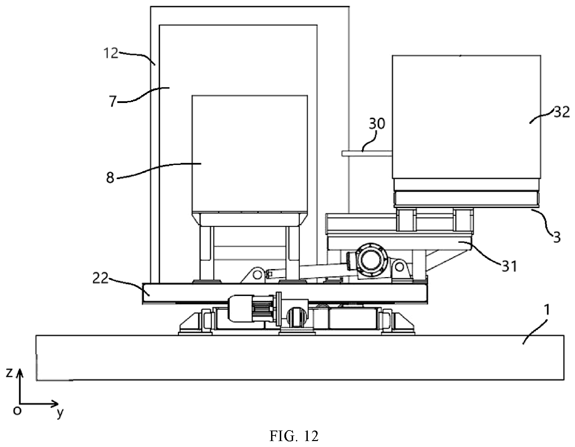

In some embodiments, as shown in FIG. 12, the accelerator assembly 3 includes a second bracket 31 and an accelerator 32, wherein the second bracket 31 is fixed to the support platform 2, and in particular, the second bracket 31 is fixed to the upper platform 22; and the accelerator 32 is movably mounted on the second bracket 31 along the second direction y.

In this embodiment, on the basis that the support platform 2 drives the accelerator assembly 3 to move along the second direction y, the accelerator 32 is made movable relative to the second bracket 31 along the second direction y. Thus, when maintenance of the accelerator 32 is required, the accelerator 32 may be pushed outward relative to the second bracket 31 along the second direction y, so as to facilitate inspection and maintenance of the accelerator.

The specific working principle of the analysis and detection device of the present disclosure will be described below.

As shown in FIG. 6, before it is desired to enter the calibration mode, the first driving component 9 is controlled to retract first to bring the shielding body 7 away from the shielding position through the support platform 2, thereby fully exposing the measurement assembly 5.

As shown in FIG. 7, the calibration assembly 6 is mounted onto the vertical plate 12, and the calibration assembly 6 is located between the radiation source 4 and the measurement assembly 5 along the second direction y. Then, the second driving component 10 may be controlled to drive, via the support platform 2, the components thereon to move along the second direction y, such that a preset distance reaches between the radiation source 4 and the calibration assembly 6 and the detector 83 is aligned with the calibration assembly 6. Subsequently, the first driving component 9 may be controlled to extend to bring, through the support platform 2, the shielding body 7 to the shielding position to thereby fully enclose the measurement assembly 5, the calibration assembly 6 and the radiation source 4. Thus, operation under the calibration mode may be performed.

If the calibration assembly 6 needs to be replaced, the abovementioned processes corresponding to FIGS. 6 and 7 may be repeated.

As shown in FIG. 8, before it is needed to enter the detection mode, the first driving component 9 is controlled to retract first to bring the shielding body 7 away from the shielding position through the support platform 2, thereby fully exposing the measurement assembly 5. Then, the calibration assembly 6 is removed.

As shown in FIG. 9, the second driving component 10 is controlled to drive, via the support platform 2, the components thereon to move along the second direction y, such that the radiation source 4 approaches the measurement assembly 5 until a preset distance reaches between the radiation source 4 and the measurement assembly 5 as well and the detector 83 is aligned with the measurement assembly 5.

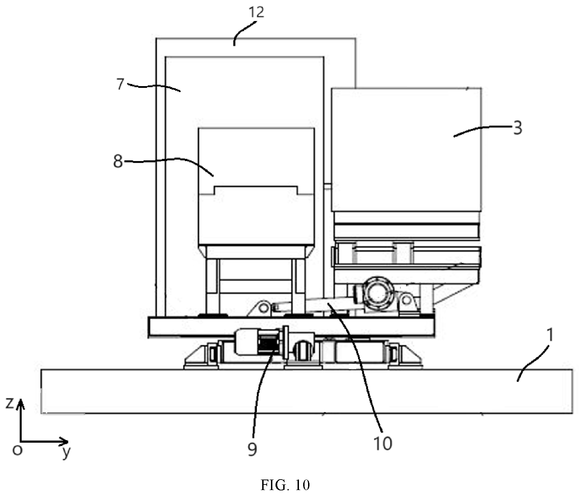

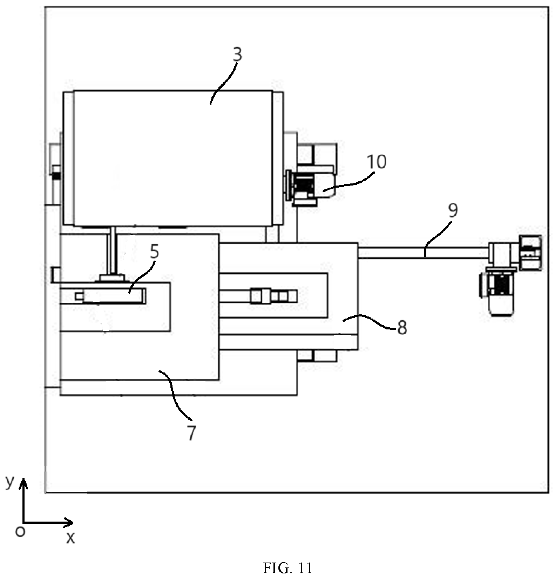

As shown in FIGS. 10 and 11, the first driving component 9 is controlled to extend to bring, through the support platform 2, the shielding body 7 to the shielding position to thereby fully enclose the measurement assembly 5, the calibration assembly 6 and the radiation source 4. Thus, operation under the detection mode may be performed.

Secondly, the present disclosure provides a spent fuel reprocessing system, which includes the analysis and detection device in the above embodiments. The spent fuel refers to the nuclear fuel discharged from the reactor after "burning" to a certain extent in the reactor. The spent fuel reprocessing system involves with the treatment of spent fuel having been used in the reactors, and separation of useful elements (such as uranium and plutonium) from fission products and other substances for use in the manufacture of new nuclear fuel elements to achieve partial recycling of nuclear fuels, or extraction of plutonium therefrom for the manufacture of nuclear weapons.

The analysis and detection device in the present disclosure can be used for detecting specific components in the spent fuel. As this kind of analysis and detection device can be flexibly switched between the calibration mode and the detection mode, which is convenient for detection and maintenance, the influence of long calibration downtime of the analysis and detection device on the overall working efficiency of the spent fuel reprocessing system can be reduced. Moreover, as the test object is toxic or radioactive, the shielding body 7 can provide protection no matter in the calibration mode or the detection mode to protect operators from injury.

Finally, a using method for the analysis and detection device in the above embodiments is provided, which in some embodiments includes:
when the calibration assembly 6 needs to be removed or installed, moving the support platform 2 along the first direction x to bring the shielding body 7 away;
when it is desired to enter the calibration mode or the detection mode, moving the support platform 2 along the first direction x to place the shielding body 7 into a radiation shielding position;
when it is desired to enter the calibration mode or the detection mode, moving the support platform 2 along the second direction y to match the positions of the radiation source 4 and the detector assembly 8 with those of the calibration assembly 6 or the measurement assembly 5.

In this embodiment, the support platform 2 is designed to be movable in two degrees of freedom, which enables the analysis and detection device to be flexibly switched between the calibration mode and the detection mode, facilitates detection and maintenance, and reduces the influence of long calibration downtime of the analysis and detection device on the efficiency of the entire production system.

Furthermore, moving the support platform 2 along the first direction x can facilitate installation and removal of the calibration assembly 6 to enable switching between the detection mode and the calibration mode. Moreover, during operation in both modes, the shielding body 7 can provide protection, preventing radioactive materials from leaking out and ensuring operators from injury. Moving the support platform 2 along the second direction y to match the positions of the radiation source 4 and the detector assembly 8 with that of the measurement assembly 5 or the calibration assembly 6 can flexibly meet the positional requirements of the main components in the calibration mode and the detection mode.

In some embodiments, when it is desired to enter the calibration mode or the detection mode, the support platform 2 is moved into place along the second direction y first, and then moved into place along the first direction x. Optionally, these two steps may also be interchanged.

Specifically, when it is desired to enter the calibration mode, the support platform 2 is moved along the second direction y first until the detector assembly 8 is aligned with the calibration assembly 6 along the second direction y, and the radiation source 4 is spaced from the calibration assembly 6 at a preset distance along the second direction y, and then the support platform 2 is moved along the first direction x to bring the shielding body 7 to the shielding position.

When it is desired to enter the detection mode, the support platform 2 is moved along the second direction y first until the detector assembly 8 is aligned with the calibration assembly 6 along the second direction y, and the radiation source 4 is spaced from the calibration assembly 6 at a preset distance along the second direction y, and then the support platform 2 is moved along the first direction x to bring the shielding body 7 to the shielding position.

In this embodiment, the support platform 2 is moved into place along the second direction y first and then moved into place along the first direction x. When the shielding body 7 is in the open state, it is convenient to observe whether the detector assembly 8 and the radiation source 4 have been adjusted to the correct positions. If there is any positional deviation, it can be conveniently corrected. After it is confirmed that the detector assembly 8 and the radiation source 4 are adjusted into place, the support platform 2 is then moved along the first direction to bring the shielding body 7 to the shielding position.

In some embodiments, as shown in FIG. 12, the accelerator assembly 3 includes a second bracket 31 and an accelerator 32, wherein the second bracket 31 is fixed on the support platform 2, and the accelerator 32 is movably mounted on the second bracket 31 along the second direction y. The using method further includes the following steps:
when the accelerator 32 needs maintenance, moving the accelerator 32 relative to the second bracket 31 away from the shielding body 7 along the second direction y.

In this embodiment, on the basis that the support platform 2 drives the accelerator assembly 3 to move along the second direction y, the accelerator 32 is also made movable relative to the second bracket 31 along the second direction y. Thus, when maintenance of the accelerator 32 is required, the accelerator 32 may be pushed outward relative to the second bracket 31 along the second direction y, so as to facilitate inspection and maintenance of the accelerator.

The embodiments provided by the present disclosure have been described in detail. Specific embodiments are used herein to elaborate on the principles and implementations of the present disclosure. The foregoing description of the embodiments is merely intended to facilitate understanding of the method and core concept of the present disclosure. It should be noted that those skilled in the art may make various modifications and improvements to the present disclosure without departing from the principles thereof, and such modifications and improvements shall also fall within the protection scope of the claims of the present disclosure.

## Claims

1. An analysis and detection device comprising:
a base (1);
a support platform (2) movably disposed on the base (1) along a first direction (x) and a second direction (y) which are perpendicular to each other within a horizontal plane;
an accelerator assembly (3) and a radiation source (4), wherein the radiation source (4) is located at a side of the accelerator assembly (3) along the second direction (y), the radiation source (4) is fixed relative to the accelerator assembly (3) and is configured to receive radiation beam emitted by the accelerator assembly (3) to generate particles;
a measurement assembly (5) fixedly mounted relative to the base (1) and configured to accommodate a test object to enable a detection mode;
a calibration assembly (6) detachably disposed, which is configured to accommodate a calibration object to enable a calibration mode;
a shielding body (7) for shielding the radiation source (4), the measurement assembly (5) and the calibration assembly (6) from radiation; and
a detector assembly (8) disposed at a side of the shielding body (7) along the first direction (x) and configured to receive the particles having interacted with the test object or the calibration object so as to analyze a type and a content of the test object or the calibration object;
wherein the accelerator assembly (3), the shielding body (7) and the detector assembly (8) are all disposed on the support platform (2), and the support platform (2) is configured to drive the shielding body (7) to move to or away from a shielding position along the first direction (x).

2. The analysis and detection device according to claim 1, wherein the support platform (2) is configured to, when the calibration assembly (6) needs to be installed or removed, drive the shielding body (7) to move away from the shielding position along the first direction (x), and when it is required to enter the calibration mode or the detection mode, drive the shielding body (7) to move to the shielding position in a direction opposite to the first direction (x).

3. The analysis and detection device according to claim 1 or 2, wherein the support platform (2) is configured to be movable along the second direction (y) so as to align the radiation source (4) and the detector assembly (8) with either of the measurement assembly (5) or the calibration assembly (6).

4. The analysis and detection device according to any one of claims 1 to 3, wherein
in the calibration mode, the calibration assembly (6) is fixed with respect to the base (1) and is mounted between the measurement assembly (5) and the radiation source (4) along the second direction (y);
in the detection mode, the calibration assembly (6) is removed.

5. The analysis and detection device according to claim 4, wherein in the detection mode, the support platform (2) is configured to move along the second direction (y) to move the radiation source (4) close to the measurement assembly (5), such that a distance between the radiation source (4) and the measurement assembly (5) is equal to a distance between the radiation source (4) and the calibration assembly (6) in the calibration mode.

6. The analysis and detection device according to any one of claims 1 to 5, wherein,
in the calibration mode, the detector assembly (8) is aligned with the calibration assembly (6) along the second direction (y); or
in the detection mode, the detector assembly (8) is aligned with the measurement assembly (5) along the second direction (y).

7. The analysis and detection device according to any one of claims 1 to 6, wherein the calibration assembly (6) comprises a first bracket (61) and a calibration cell (62); the first bracket (61) is configured to achieve detachable mounting, and the calibration cell (62) is mounted to the first bracket (61) in a pluggable manner and is configured to accommodate the calibration object.

8. The analysis and detection device according to any one of claims 1 to 7, wherein on a side of the accelerator assembly (3) is disposed a drift tube (30) which extends along the second direction (y) for defining a path of the radiation beam, and the drift tube (30) extends into the shielding body (7) and has its end portion fixed with the radiation source (4).

9. The analysis and detection device according to any one of claims 1 to 7, wherein on a side of the accelerator assembly (3) is disposed a drift tube (30) which extends along the second direction (y) for defining a path of the radiation beam, and the drift tube (30) extends into the shielding body (7); and the radiation source (4) is fixed to an inner wall of the shielding body (7) and located at an end of the drift tube (30).

10. The analysis and detection device according to any one of claims 1 to 9, wherein the support platform (2) comprises a lower platform (21) and an upper platform (22), the analysis and detection device further comprising:
a first driving component (9) disposed between the base (1) and the lower platform (21) and configured to drive the lower platform (21) to move with respect to the base (1) along one of the first direction (x) and the second direction (y); and
a second driving component (10) disposed between the lower platform (21) and the upper platform (22) and configured to drive the upper platform (22) to move with respect to the lower platform (21) along the other one of the first direction (x) and the second direction (y).

11. The analysis and detection device according to claim 10, wherein an area of the lower platform (21) is smaller than that of the upper platform (22).

12. The analysis and detection device according to claim 10 or 11, further comprising two guide rails (11), wherein the two guide rails (11) are disposed on the base (1) at intervals, and extend in a direction consistent with a movement direction of the lower platform (21).

13. The analysis and detection device according to any one of claims 1 to 12, wherein the accelerator assembly (3) comprises a second bracket (31) and an accelerator (32); the second bracket (31) is fixed to the support platform (2), and the accelerator (32) is movably mounted on the second bracket (31) along the second direction (y).

14. A spent fuel reprocessing system, comprising the analysis and detection device according to any one of claims 1 to 13.
